# EUROPÄISCHE PATENTSCHRIFT

(11) **EP 0 721 808 B1**
(45) Veröffentlichungstag und Bekanntmachung des Hinweises auf die Patenterteilung: **27.01.1999**
(21) Anmeldenummer: 95116919.2
(22) Anmeldetag: 27.10.1995
(51) Int. Cl.: B08B 9/42

(54) **Reinigungsmaschine für Gefässe**
Cleaning machine for containers
Machine de nettoyage de récipients

(30) Priorität: 16.12.1994 DE 4445016; 12.04.1995 DE 19513221
(43) Veröffentlichungstag der Anmeldung: 17.07.1996
(73) Patentinhaber: Kronseder, Hermann, D-93086 Wörth (DE)
(72) Erfinder: Kronseder, Hermann, D-93086 Wörth (DE)

(56) Entgegenhaltungen:
- DE-A- 4 131 699
- DE-A- 4 204 884
- DE-C- 4 022 486
- US-A- 4 104 081

## Beschreibung

Die Erfindung betrifft eine Reinigungsmaschine für Gefäße gemäß dem Oberbegriff des Anspruchs 1.

Derartige Reinigungsmaschinen, auch Rinser genannt, dienen im allgemeinen dazu, innerhalb einer Abfüllanlage für Flaschen, Gläser oder dgl. die leeren Gefäße durch Ausspritzen des Innenraums mit einem oder verschiedenen Fluiden wie Wasser, Luft oder Dampf zu reinigen und ggf. zu sterilisieren. Dabei wird neben einem störungsfreien Transport und einer zuverlässigen Ausspritzung der Gefäße zunehmend auch eine gute Reinigungsmöglichkeit für die Reinigungsmaschine selbst gefordert, um einer Verkeimung der behandelten Gefäße entgegenzuwirken.

Bei einer bekannten Reinigungsmaschine der eingangs genannten Art besteht jede Greifzange aus zwei gelenkig miteinander verbundenen, durch eine Feder im Schließsinne beaufschlagten Klemmhebeln, wobei der eine Klemmhebel direkt auf der Schwenkachse drehbar gelagert ist. Dieser Klemmhebel ist mit zwei drehbaren Kurvenrollen versehen, die eine räumlich gekrümmte, ortsfeste Steuerkurve abtasten und so die Schwenkbewegung jeder Greifzange steuern. Der andere Klemmhebel trägt gleichfalls eine drehbare Kurvenrolle, die ein im Bereich der Zufuhr- und Abfuhreinrichtung für die Gefäße angeordnetes ortsfestes Kurvenstück abtastet und so die Öffnungs- oder Schließbewegung der Greifzange steuert (FR-OS 2 489 802). Nach dem Schließen sind die am Hals unterhalb des verdickten Kopfs erfaßten Gefäße ausschließlich durch die Spannkraft der Federn fixiert. Die Greifzangen dieser bekannten Reinigungsmaschine sind konstruktiv sehr aufwendig, insbesondere aufgrund der vielen Gelenke, Kurvenrollen und Steuerkurven, und außerdem schwer zu reinigen bzw. steril zu halten.

Bei einer anderen bekannten Reinigungsmaschine für Gefäße sind die beiden Klemmhebel jeder Greifzange durch Kniehebel miteinander verbunden, die durch eine Feder im Schließsinne vorgespannt sind (DE-PS 40 22 486). Durch eine einzige ortsfeste Steuerkurve und spezielle Zwischengetriebe wird sowohl die Schwenkbewegung der Greifzangen als auch die Öffnungs- und Schließbewegung der Klemmhebel gesteuert. Trotzdem ist der bauliche Aufwand, insbesondere für die Bildung der Greifzange, noch relativ groß und eine Reinigung der Greifzangen sehr mühsam.

Schließlich ist durch die US-A-4 104 081 eine Reinigungsmaschine für Gefäße mit einer in einer senkrechten Ebene umlaufenden endlosen Kette bekannt, an der mehrere Gefäßträger schwenkbar angelenkt sind. Jeder Gefäßträger weist eine am Gefäßboden angreifende Stütze, zwei den Gefäßrumpf seitlich lose umfassende Arme und einen zwischen Boden und Mündung fomschlüssig angreifenden plattenförmigen Halter aus elastischem Kunststoff auf. Dieser besitzt eine kreisförmige Aussparung mit einer seitlichen Öffnung, die enger ist als der Gefäßdurchmesser. Durch entsprechend gestaltete Transportelemente im Ein- und Auslauf der Reinigungsmaschine werden die Gefäße in die auch in Achsrichtung der Gefäße nachgiebigen Halter eingeschnappt bzw. aus diesen herausgeführt, so daß keine spezielle Steuervorrichtung für die Halter erforderlich ist. Trotzdem ergibt sich ein erheblicher baulicher Aufwand aufgrund der den Gefäßboden tragenden Stützen, die speziell an die Gefäßhöhe angepaßt sein müssen und einen Austausch der Gefäßträger bei einer Umstellung auf andere Gefäßhöhen erfordern.

Der Erfindung liegt die Aufgabe zugrunde, bei einer Reinigungsmaschine der eingangs genannten Art unter Vermeidung einer am Gefäßboden angreifenden Stütze den baulichen Aufwand wesentlich zu senken und eine Reinigung der Greifzangen zu vereinfachen.

Diese Aufgabe wird erfindungsgemäß durch die im Kennzeichen des Anspruchs 1 angegebenen Merkmale gelöst.

Bei einer erfindungsgemäßen Reinigungsmaschine ist keine Steinerkurve für das Öffnen und/oder Schließen der Greifzangen erforderlich und diese können extrem einfach aufgebaut sein.

Aufgrund der kraft- und formschlüssigen Einspannung der Gefäße zwischen den klemmhebeln sowie deren versteifter gestaltung werden die gefäße auch ohne Bodenabstützung sicher fixiert. Neben einer beträchtlichen Senkung der Fertigungskosten wird so auch die Sauberhaltung oder Sterilhaltung wesentlich vereinfacht.

Vorteilhafte Weiterbildungen der Erfindung, die alle zu günstigen Herstellungskosten, einer besonders "glatten" und "Steifen" Bauweise der Greifzangen sowie zu einer zuverlässigen kraft- und formschlüssigen Verbindung zwischen Greifzange und Gefäß beitragen, sind in den Unteransprüchen enthalten.

Im Nachstehenden wird ein Ausführungsbeispiel der Erfindung anhand der Zeichnungen beschrieben. Es zeigen:
- Fig. 1: die schematische Draufsicht auf eine Reinigungsmaschine,
- Fig. 2: den Schnitt A-B nach Fig. 1 in vergrößerter Darstellung,
- Fig. 3: die Draufsicht auf die obere Greifzange nach Fig. 2,
- Fig. 4: den Schnitt C-D nach Fig. 3,
- Fig. 5: die Draufsicht auf die untere Greifzange nach Fig. 2,
- Fig. 6: den Schnitt A-B nach Fig. 1 mit einer anderen Ausführung der Greifzange,
- Fig. 7: die Draufsicht auf die Greifzange nach Fig. 6.

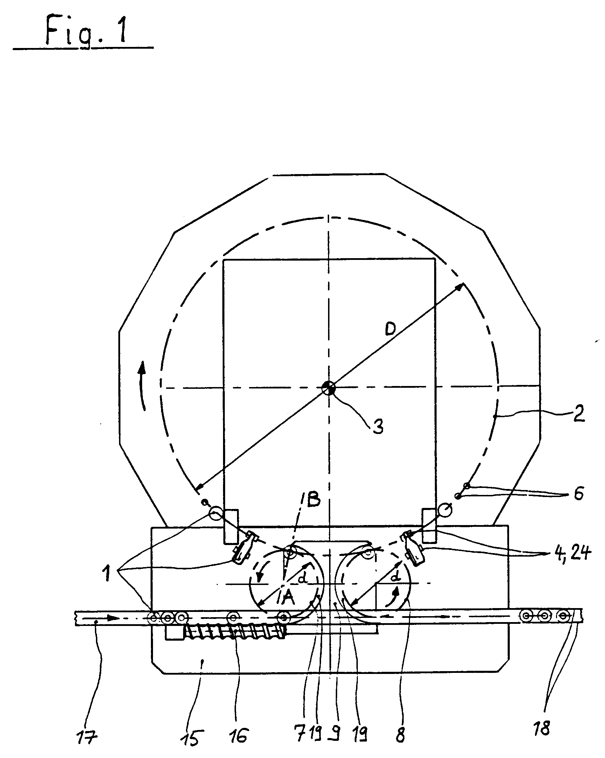

Die Reinigungsmaschine nach Fig. 1 bis 5 ist zum Ausspritzen von leeren Flaschen 1 aus Glas mit keimfreiem Wasser eingerichtet. Sie weist ein Gehäuse 15 auf, an dessen Oberseite ein Rotor 2 mit senkrechter Drehachse 3, ein Einlaufstern 7, ein Auslaufstern 8, jeweils wiederum mit senkrechter Drehachse, sowie eine Einlaufschnecke 16 mit horizontaler Drehachse gelagert sind. Die Transportelemente 2, 7, 8 und 16 werden durch eine nicht gezeigte Antriebseinrichtung in Pfeilrichtung synchron zueinander angetrieben, wobei die Teilkreise d von Einlaufstern 7 und Auslaufstern 8 mit dem Teilkreis D des Rotors 2 kämmen. Die Zu- und Abfuhr der Flaschen 1 zur bzw. von der Reinigungsmaschine erfolgt durch ein horizontales, in Pfeilrichtung angetriebenes Förderband 17 mit seitlichen Geländern 18; die Führung der Flaschen 1 im Bereich von Einlaufstern 7 und Auslaufstern 8 erfolgt durch einen Führungsbogen 9, wobei die Flaschen 1 auf ortsfesten Gleitschienen 19 stehen.

An der zylindrischen Außenseite des Rotors 2 ist gleichmäßig über den Umfang verteilt eine Anzahl von senkrecht nach oben gerichteten Düsen 6 angeordnet, die über nicht gezeigte Steuerventile mit einer nicht gezeigten Zuleitung für das Spritzmedium, in diesem Falle keimfreies Wasser, in Verbindung stehen.

Über jeder Düse 6 ist an der zylindrischen Außenseite des Rotors 2 ein gabelförmiger Lagerbock 20 befestigt, dessen freie Enden radial nach außen weisen und eine horizontale Schwenkachse 5 tragen, die tangential zum Umkreis des Rotors 2 verläuft. Auf der Schwenkachse 5 ist ein Klotz 21 drehbar gelagert, an dessen Unterseite ein schräg nach innen/unten ragendes Gabelstück 22 befestigt ist. Dieses greift eine ortsfeste Steuerkurve 23 ab, die durch eine räumlich gekrümmte endlose Rundstange gebildet wird. Diese ist über mehrere nicht gezeigte Stützen ortsfest am Umfang des Rotors 2 gehalten und bildet zusammen mit den Gabelstücken 22 eine Steuereinrichtung 10 für die Schwenkbewegung von Greifzangen 4, 24.

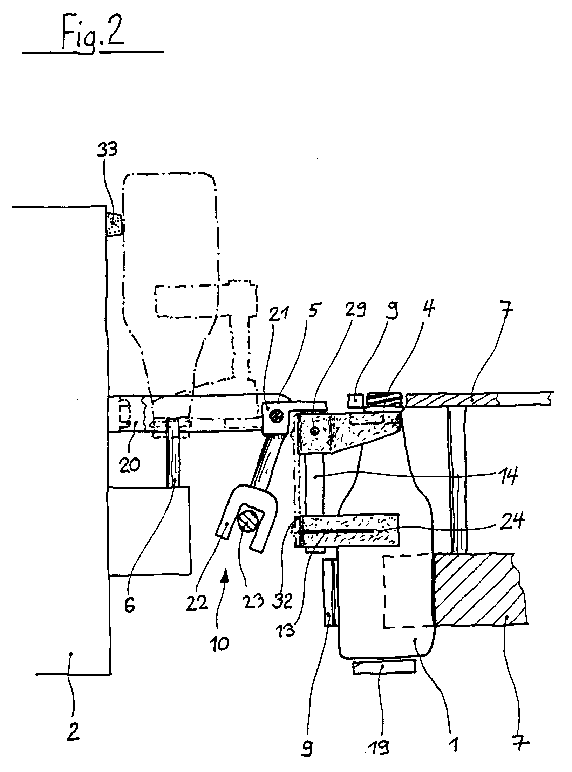

An der radial nach außen weisenden Seite jedes Klotzes 21 ist eine Halterung 14 in Form einer Vierkant-Stange befestigt, die in der in Fig. 2 gezeigten Normalposition senkrecht nach unten ragt. An der Halterung 14 sind durch Querstifte 29 eine obere Greifzange 4 und eine untere Greifzange 24 lösbar mit Abstand befestigt. Die obere Greifzange 4 ist auf Höhe des konischen Halses dicht unterhalb des Flaschenkopfes, die untere Greifzange 24 auf Höhe des zylindrischen Flaschenrumpfes einer auf der Gleitschiene 19 stehenden Flasche 1 angeordnet. Beide Greifzangen 4, 24 sind einstückig ausgebildet und bestehen aus zähelastischem, verschleißfestem Kunststoff, wie z.B. Polyamid, ggf. mit Glasfaserverstärkung.

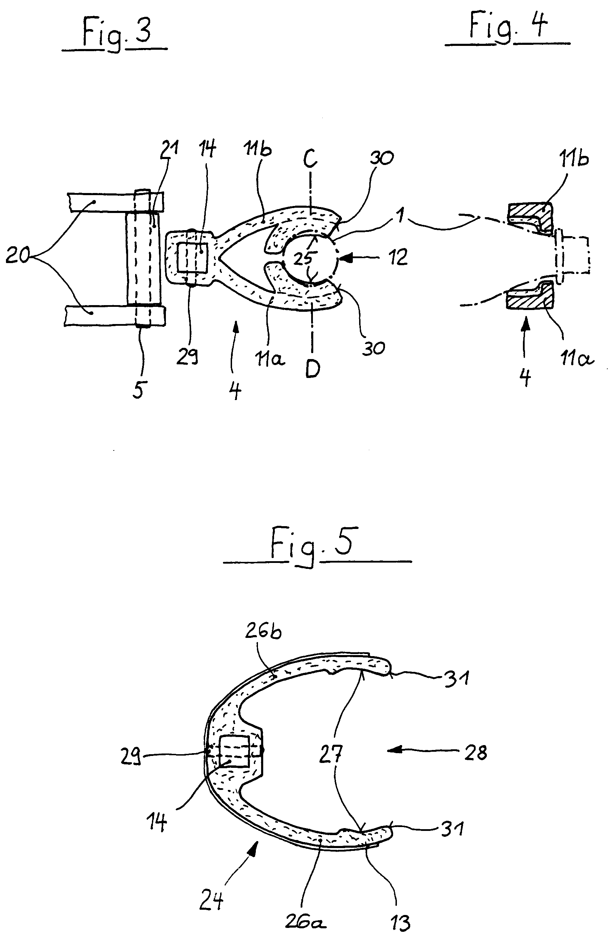

Wie die Fig. 3 zeigt, weist die obere Greifzange 4 eine Y-förmige Grundform auf. Dabei ist der mittlere Schenkel oder die Basis mit einem quadratischen Loch versehen und steckt auf der Halterung 14. Die beiden schräg abstehenden leicht gebogenen Seitenschenkel bilden elastische Klemmhebel 11a, 11b, die teilweise winkelförmig abgebogen sind und mit zwei in etwa viertelkreisförmigen Ausnehmungen 25 für den Flaschenhals versehen sind. Zwischen den beiden Klemmhebeln 11a, b, verbleibt eine radial nach außen weisende Öffnung 12, durch die die Flaschen 1 ein- und austreten. Im Anschluß an die Ausnehmungen 25 sind die Klemmhebel 11a, b mit sich nach außen hin erweiternden Abschrägungen 30 versehen, welche das Einführen der Flaschen 1 erleichtern. Im entspannten Zustand, wie er in Fig. 3 dargestellt ist, ist der maximale Abstand zwischen den Ausnehmungen 25 etwas kleiner als der Durchmesser des strichpunktiert eingezeichneten Flaschenhalses und es liegen sich die Klemmhebel 11a, b in dem von der Öffnung 12 abgewandten inneren Bereich der Ausnehmungen 25 mit geringem Abstand gegenüber.

Wie die Fig. 2 bis 4 weiter zeigen, weisen die Klemmhebel 11a, b beginnend an der Basis, wo sie miteinander verbunden sind, bis in etwa zu ihrer Mitte einen rechteckigen Querschnitt mit abnehmender Höhe auf. Der Bereich des rechteckigen Querschnitts bildet eine Art Blattfeder, die einerseits aufgrund der Elastizität des Kunststoffs die Beweglichkeit der Klemmhebel 11a, b ermöglicht und andererseits die Spannkraft beim Aufbiegen oder Aufspreizen durch den Flaschenhals erzeugt. Der sich anschließende Bereich mit winkelförmigem Querschnitt, in dessen aufeinander zuweisenden horizontalen Abschnitten die Ausnehmungen 25 ausgebildet sind, nimmt an der elastischen Verformung der Klemmhebel 11a, b nicht nennenswert teil. Durch diese Aufteilung der Funktionsbereiche ergibt sich eine optimale Beweglichkeit sowie Klemmwirkung. Außerdem ist durch die versteifende winkelförmige Gestaltung im Bereich der Ausnehmungen 25 eine Abstützung der Flasche 1 im kegeligen Halsbereich möglich, wie die Fig. 4 zeigt. Dadurch wird die Flasche 1 in der Greifzange 4 zusätzlich stabilisiert und ein Absinken wird verhindert, wenn die Flasche 1 auf dem Kopf steht. Die Greifzange 4 ist durch Spritzen äußerst kostengünstig herstellbar und aufgrund ihrer glatten, offenen und spaltfreien Bauweise sehr einfach zu reinigen und erforderlichenfalls steril zu halten.

Die untere Greifzange 24 ist gleichfalls einstückig ausgebildet und aus einem formbeständigen, zähelastischen Kunststoff geeigneter Härte gefertigt. Sie weist eine U-förmige Grundform auf, wobei der Mittelschenkel verdickt und mit einer quadratischen Öffnung versehen ist. Diese steckt stramm auf der Halterung 14. Die beiden Seitenschenkel bilden elastische Klemmhebel 26a, b und besitzen über ihre gesamte Länge einen rechteckigen Querschnitt gleicher Höhe. Im freien Endbereich sind an den aufeinander zuweisenden Innenseiten der beiden Klemmhebel 26a, b teilzylindrische Ausnehmungen 27 ausgebildet. Der maximale Abstand beider Ausnehmungen 27 im entspannten Zustand der Greifzange 24 ohne Flasche 1 ist kleiner als der Durchmesser des Flaschenrumpfes. Sitzt in der Greifzange 24 eine Flasche 1, so werden die beiden Klemmhebel 26a, b elastisch aufgespreizt, wobei die gewünschte Klemmkraft erzeugt wird. Die Flaschen 1 werden somit wie in der Greifzange 4 formschlüssig und kraftschlüssig in der Greifzange 24 gehalten. Die freien Enden beider Klemmbacken 26a, b sind nach außen hin mit Abrundungen 31 versehen, um das Ein- und Ausführen der Flaschen 1 durch die zwischen ihnen gebildete Öffnung 28 zu erleichtern. Auch die untere Greifzange 24 ist äußerst kostengünstig herstellbar und einfachst zu reinigen.

Die Klemmkraft kann auf einfache Weise erhöht werden, indem in eine an der Außenseite der Greifzange 24 verlaufende Nut eine U-förmige Feder 13 aus Federstahl eingelegt wird. Durch Verwendung unterschiedlicher Federn 13 ist mühelos und schnell eine Anpassung an die gegebenen Betriebsbedingungen möglich. Das gleiche gilt selbstverständlich für die Greifzange 4 nach Fig. 3 und 4. Auch ist es möglich, eine entsprechende Feder beim Herstellungsvorgang mit einzugießen.

Die beiden vorbeschriebenen Greifzangen 4 und 24 können durch Entfernen der Querstifte 29 und Abziehen von der Halterung 14 nach unten hin rasch und mühelos ausgetauscht werden, z.B. bei Verschleiß nach längerer Betriebsdauer oder beim Umstellen der Reinigungsmaschine auf eine andere Flaschensorte. Der Umstellvorgang kann noch vereinfacht werden, wenn die einer bestimmten Flaschensorte zugehörigen oberen Greifzangen 4 und unteren Greifzangen 24 durch eine in Fig. 2 strichpunktiert angedeutete Verbindungsplatte 32 zu einer Baueinheit gekoppelt sind. Selbstverständlich sind auch andere Halterungen durch Klemmschrauben, Schnappverschlüsse usw. möglich.

Abgesehen von der Steuereinrichtung 10 für die gemeinsame Schwenkbewegung der Greifzangen 4 und 24 sind keine weiteren Steuereinrichtungen vorhanden; der Greifvorgang wird vielmehr durch die Flaschen 1 selbst gesteuert, wie die nachstehende Funktionsbeschreibung der Reinigungsmaschine nach den Fig. 1 bis 5 zeigt.

Bei eingeschalteter Antriebseinrichtung und ausreichender Flaschenzufuhr auf dem gleichfalls eingeschalteten Förderband 17 werden die aufrechtstehenden Flaschen 1 durch die Einlaufschnecke 16 eingetaktet und dann der Reihe nach vom Einlaufstern 7 übernommen und auf den kontinuierlich umlaufenden Rotor 2 zubewegt. Dabei gleiten die Flaschen 1 auf dem Gleitblech 19 und werden durch die untere Sternplatte des Einlaufsterns 7 und den unteren Bogen des Führungsbogens 9 im Rumpfbereich und durch die obere Sternplatte des Einlaufsterns 7 und den oberen Bogen des Führungsbogens 9 auf Höhe des Flaschenkopfs exakt geführt. Bei Annäherung an den Rotor 2 dringt eine Flasche 1 allmählich in die Öffnung 12 der oberen Greifzange 4 bzw. Öffnung 28 der unteren Greifzange 24 ein und kommt schließlich mit den Abschrägungen 30 der oberen Greifzange 4 bzw. den Abrundungen 31 der unteren Greifzange 24 in direkten Kontakt. Die Kreisbahnen der Greifzangen 4, 24 und der Flasche 1 nähern sich weiter an, wobei die Klemmhebel 11a, b der oberen Greifzange 4 bzw. Klemmhebel 26a, b der unteren Greifzange 24 unmittelbar durch die Flasche 1 aufgespreizt werden. Bedingt durch die geometrische Anordnung der Ausnehmungen 25 bzw. 27 ergibt sich zunächst ein Bereich der maximalen Ausbiegung, wenn die Flasche 1 exakt zwischen den äußeren Endbereichen der Ausnehmungen 25 bzw. 27 sitzt. Wenn dann die Flasche 1 vollständig und satt in den Ausnehmungen 25 bzw. 27 sitzt, federn die Klemmhebel 11a, b bzw. 26a, b leicht zurück, sind aber immer noch gegenüber ihrem entspannten Normalzustand nach außen gebogen, so daß eine ausreichende Klemmkraft dür die kraftschlüssige Einspannung der Flasche 1 verbleibt.

Zusätzlich ergibt sich eine formschlüssige Halterung aufgrund der teilzylindrischen Gestaltung der Ausnehmungen 25 bzw. 27 und der Tatsache, daß die lichte Weite der Öffnung 12 bzw. 28 auch im gespannten Zustand der Greifzange 4 bzw. 24 kleiner ist als der Durchmesser der Flasche 1 im ergriffenen Bereich. Anders ausgedrückt erstrecken sich die Ausnehmungen 25, 27 beiderseits einer sie verbindenden Durchmesserlinie parallel zur Schwenkachse 5, wobei die Ausnehmungen 25 leicht nach innen gegenüber der Durchmesserlinie verschoben sind und die Ausnehmungen 27 in etwa symmetrisch zu ihr liegen.

Das vorbeschriebene Einspannen einer Flasche 1, verbunden mit einem Aufspreizen der Klemmhebel 11a, b bzw. 26a, b ist abgeschlossen, wenn die betreffende Flasche 1 mit ihrer Mitte die Verbindungsgerade zwischen der Drehachse 3 des Rotors 2 und der Drehachse des Einlaufsterns 7 erreicht hat. Diese Position ist in Fig. 2 gezeigt. An dieser Stelle endet die Gleitschiene 19 und der Führungsbogen 9. Unmittelbar darauf wird durch die Steuereinrichtung 10 der Klotz 21 mit den Greifzangen 4 und 24 und der festgeklemmten Flasche 1 um 180 Grad nach oben in die in Fig. 2 strichpunktiert gezeichnete Lage geschwenkt. Die nach unten weisende Mündung der Flasche 1 sitzt nunmehr zentrisch über der Spritzdüse 6 und das Ausspritzen beginnt.

Im gewendeten Zustand werden die Flaschen 1 durch die Zentrifugalkraft in die Greifzangen 4, 24 hineingedrängt und daher absolut zuverlässig gehalten. Der auf den Flaschenboden evtl. einwirkende Spritzdruck wird über den Flaschenkopf in die nun unten liegende Greifzange 4 eingeleitet. Die Klemmkraft und damit die Belastung der Greifzangen 4, 24 kann daher relativ gering gehalten werden, so daß eine hohe Lebensdauer gesichert ist. Bei der Behandlung leichter Kunststoffflaschen kann auf die untere Greifzange 24 evtl. verzichtet werden. Auch kann am Rotor ein die Flasche 1 in der gewendeten Position an der Innenseite abstützender Anschlag 33 angebracht werden.

Nach dem Ausspritzen werden die Greifzangen 4, 24 mit den kraft- und formschlüssig eingespannten Flaschen 1 durch die Steuereinrichtung 10 um 180 Grad zurückverschwenkt, so daß sie in der aufrechten Normalposition am Auslaufstern 8 eintreffen. Die Flaschen 1 laufen nunmehr zwischen die Taschen des Auslaufsterns 8 und den Führungsbogen 9 ein und werden durch letzteren im Bereich des Kopfes und des Rumpfes allmählich durch die Öffnungen 12 bzw. 28 aus den Greifzangen 4 bzw. 24 herausbewegt entsprechend den auseinanderlaufenden Kreisbahnen von Greifzangen 4, 24 und Flaschen 1. Dabei werden wiederum direkt durch den Kontakt mit der Flasche 1 die Klemmhebel 11a, b bzw. 26a, b zunächst leicht geöffnet, bis die Flasche 1 vollständig aus den Ausnehmungen 25 bzw. 27 herausgetreten ist, worauf sie an der Flasche 1 entlang gleiten und in ihre entspannte Normalposition zurückfedern. Während dieses Steuervorgangs sind die Flaschen 1 im Bereich des Kopfes durch die obere Sternplatte und den oberen Bogen und im Bereich des Rumpfes durch die untere Sternplatte des Auslaufsterns 8 und den unteren Bogen des Führungsbogen 9 exakt geführt und stehen auf einer Gleitschiene 19. Wie die Fig. 2 zeigt, greifen die Greifzangen 4 und 24 zwischen die oberen und unteren Elemente von Einlaufstern 7 und Auslaufstern 8 bzw. des Führungsbogens 9 ein, so daß die Flaschen 1 weder beim Einführen in die Greifzangen 4, 24 noch beim Ausführen kippen können. Schließlich werden die Flaschen 1 durch den Auslaufstern 8 in aufrechter Normalposition an das Förderband 17 übergeben und laufen weiter zur nicht gezeigten Füll- und Verschließmaschine.

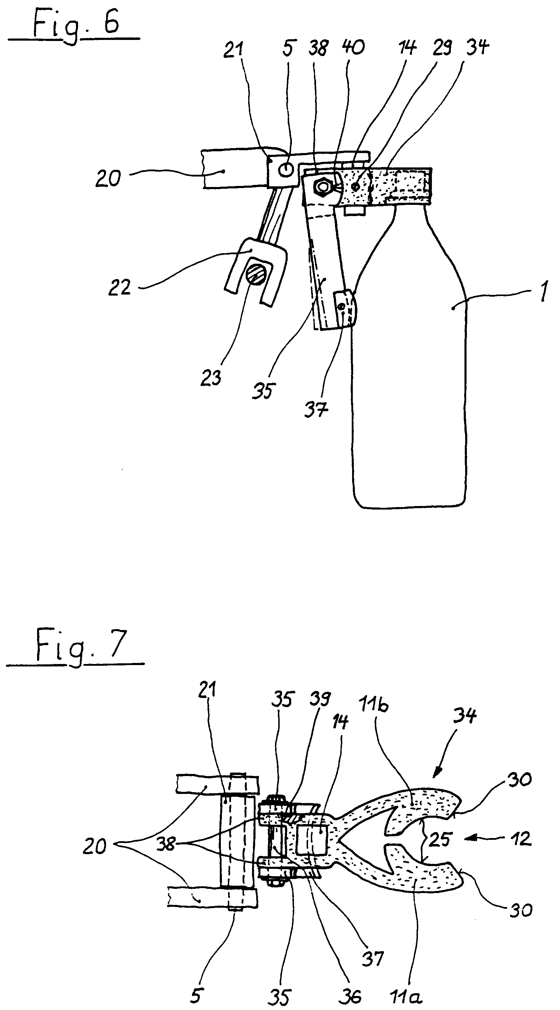

Die Greifzange 34 nach Fig. 6 und 7 stimmt teilweise mit der Ausführung nach Fig. 1 bis 4 überein. Im Nachstehenden werden daher nur die Abweichungen beschrieben: An der zur Drehachse 3 des Rotors 2 weisenden Innenseite des Basisteils ist die Greifzange 34 mit zwei zungenartigen, parallelen Ansätzen 38 versehen. Diese weisen fluchtende Bohrungen auf, in denen ein horizontaler, tangential zum Umkreis des Rotors 2 bzw. parallel zur Schwenkachse 5 verlaufender Bolzen 36 steckt. Die Außenflächen der Ansätze 38 sind mit drei kerbenartigen Vertiefungen 40 versehen, die in drei verschiedenen Winkeln bezüglich der Mittelachse des Bolzens 36 verlaufen.

An der Greifzange 34 ist eine in der Normalposition von dieser weg nach unten ragende, hebelartige Stütze 35 verstellbar fixiert. Hierzu ist das obere Ende der Stütze 35 gabelartig ausgebildet und umfaßt die Greifzange 34 an den Außenseiten der beiden Ansätze 38. Mittels zweier in den Bolzen 36 eingedrehter Schrauben sind die gabelförmigen Enden der wie die Greifzange 34 aus elastischem Kunststoff bestehenden Stütze 35 gegen die elastisch nachgiebigen Ansätze 38 der einteiligen Greifzange 34 vorgespannt und gleichzeitig schwenkbar mit der Greifzange 34 verbunden. An den aufeinander zuweisenden Innenseiten der Gabelenden der Stütze 35 ist jeweils eine längliche, keilförmige Erhöhung 39 ausgebildet. Die beiden Erhöhungen 39 fluchten miteinander, genauso wie die Vertiefungen 40 in der Greifzange 34. In der in Fig. 6 gezeigten Position greifen die beiden Erhöhungen 39 in die mittleren Vertiefungen 40 ein. Dadurch ist die gezeichnete Winkelposition zwischen Greifzange 34 und Stütze 35 durch die von den Erhöhungen 39 und Vertiefungen 40 gebildete elastische Rasteinrichtung fixiert. Durch manuelles Verschwenken der Stütze 35 ist rasch und mühelos eine Umstellung der Winkelposition möglich, wobei das Austreten der Erhöhungen 39 aus den Vertiefungen 40 durch die Eigenelastizität der Ansätze 38 und ggf. der Gabelenden der Stütze 35 ermöglicht wird. Die beiden anderen fixierten Winkelpositionen der Stütze 35 sind strichliert und strichpunktiert angedeutet und für Flaschen 1 mit größerem bzw. kleinerem Durchmesser vorgesehen.

Am unteren Ende der Stütze 35 ist ein Stützschuh 37 lösbar befestigt, der an seiner zur Flasche 1 weisenden Arbeitsfläche in einer horizontalen Ebene leicht konkav und in einer senkrechten Ebene leicht konvex verläuft. Der Krümmungsradius der konkaven Form ist mindestens so groß wie der Krümmungsradius der größten abzustützenden Flasche 1; der Krümmungsradius der konvexen Gestaltung ist derart, daß der Stützschuh 37 an allen zu bearbeitenden Flaschensorten gut anliegt.

Bei der vorstehend beschriebenen Ausführungsform wird die Zentrierung und axiale Fixierung der Flaschen 1 ausschließlich durch die form- und kraftschlüssige Halterung der Flasche 1 in der elastischen Greifzange 34 bewirkt. Die Stütze 35 bzw. der Stützschuh 37 dienen zur seitlichen Abstützung der Flasche 1 insbesondere während der Schwenkbewegung aus der aufrechten in die umgekehrte Lage und zurück. Diese Ausführung ist insbesondere für leichtgewichtige Flaschen wie PET-Flaschen geeignet und besonders einfach und kostengünstig sowie betriebssicher gestaltet. Die Greifzange 34 bildet mit der Stütze 35 eine Baueinheit, die durch den Stift 29 lösbar auf der Halterung 14 fixiert ist und bei Bedarf rasch ausgetauscht werden kann.

## Patentansprüche

1. Reinigungsmaschine für Gefäße mit einem antreibbaren Rotor mit senkrechter Drehachse, auf dem schwenkbare Greifzangen mit tangential zum Umkreis des Rotors verlaufenden horizontalen Schwenkachsen und Spritzdüsen für ein Reinigungsmittel angeordnet sind, einem die Gefäße in aufrechter Normalposition seitlich in die Greifzangen einführenden Zuförderer, einem die Gefäße in aufrechter Normalposition seitlich aus den Greifzangen herausführenden Abförderer, und mit einer die Greifzangen mit den von diesen unterhalb des verdickten Kopfs erfaßten Gefäßen im Umlaufbereich zwischen Zu- und Abförderer verschwenkenden und dabei die ohne Bodenabstützung gehaltenen Gefäße auf den Kopf stellenden Steuereinrichtung, dadurch gekennnzeichnet, daß jede Greifzange (4, 24, 34) aus elastischem Kunststoff besteht und zwei elastisch bewegliche Klemmhebel (11a, b; 26a, b) aufweist, deren Form der Form der Gefäße (1) derart angepaßt ist, daß sie beim Einführen und Ausführen durch die Gefäße (1) selbst elastisch aufgespreizt werden und ein zwischen den Klemmhebeln (11a, b; 26a, b) sitzendes Gefäß (1) form- und kraftschlüssig zwischen sich einspannen, wobei der maximale Abstand zwischen den Klemmhebeln (11a, b; 26a, b) im entspannten Zustand kleiner ist als der Durchmesser des Gefäßes (1) im zu ergreifenden Bereich und die Klemmhebel (11a, b) derart versteift sind, dass sie allein ein ergriffenes Gefäß (1) in axialer Richtung fixieren.

2. Reinigungsmaschine nach Anspruch 1, dadurch gekennzeichnet, daß zwischen den Klemmhebeln (11a, b; 26a, b) eine Öffnung (12, 28) zur Ein- und Ausfuhr der Gefäße (1) ausgebildet ist und die Klemmhebel (11a, b; 26a, b) im Bereich der Öffnung (12, 28) nach außen hin mit Abschrägungen (30) oder Abrundungen (31) versehen sind.

3. Reinigungsmaschine nach Anspruch 1 oder 2, dadurch gekennzeichnet, daß die Greifzangen (4, 24, 34) einstückig ausgebildet sind, und einen an einer Halterung (14) befestigten Basiskörper und zwei davon abstehende, flexible Klemmhebel (11a, b; 26a, b) aufweisen.

4. Reinigungsmaschine nach einem der Ansprüche 1 bis 3, dadurch gekennzeichnet, daß die Klemmhebel (11a, b; 26a, b) mit an die Form der Gefäße (1) angepaßten, gegeneinander gerichteten Ausnehmungen (25, 27) versehen sind, welche die Gefäße (1) beiderseits einer Durchmesserlinie erfassen und zentrieren.

5. Reinigungsmaschine nach einem der Ansprüche 1 bis 4, dadurch gekennzeichnet, daß die Greifzangen (4, 24, 34) eine Y-förmige oder U-förmige Grundform aufweisen, wobei die beiden Seitenschenkel elastisch gegeneinander beweglich sind.

6. Reinigungsmaschine nach einem der Ansprüche 1 bis 5, dadurch gekennzeichnet, daß jeder Düse (6) mindestens zwei gemeinsam schwenkbare Greifzangen (4, 24) zugeordnet sind, wobei die obere Greifzange (4) im Halsbereich unmittelbar unterhalb des verdickten Kopfes und die untere Greifzange (24) im Rumpfbereich eines Gefäßes (1) angreift und der Bodenbereich frei bleibt.

7. Reinigungsmaschine nach Anspruch 6, dadurch gekennzeichnet, daß die gemeinsam schwenkbaren Greifzangen (4, 24) auf einer gemeinsamen Halterung (14) lösbar angeordnet sind.

8. Reinigungsmaschine nach Anspruch 6 oder 7, dadurch gekennzeichnet, daß die gemeinsam schwenkbaren Greifzangen (4, 24) zu einer gemeinsam austauschbaren Baueinheit verbunden sind.

9. Reinigungsmaschine nach einem der Ansprüche 1 bis 5, dadurch gekennzeichnet, daß jeder Düse (6) eine Greifzange (34) und eine gemeinsam mit dieser schwenkbaren Stütze (35) zugeordnet ist, wobei die Greifzange (34) im Halsbereich unmittelbar unterhalb des verdickten Kopfes und die Stütze (35) im Schulter- oder Rumpfbereich eines Gefäßes (1) angreift und der Bodenbereich frei bleibt.

10. Reinigungsmaschine nach Anspruch 9, dadurch gekennzeichnet, daß die Greifzange (34) und die gemeinsam mit ihr schwenkbare Stütze (35) auf einer gemeinsamen Halterung (14) lösbar angeordnet sind.

11. Reinigungsmaschine nach Anspruch 9 oder 10, dadurch gekennzeichnet, daß die Greifzange (34) und die gemeinsam mit ihr schwenkbare Stütze (35) zu einer gemeinsam austauschbaren Baueinheit verbunden sind.

12. Reinigungsmaschine nach einem der Ansprüche 9 bis 11, dadurch gekennzeichnet, daß die Stütze (35) hebelartig ausgebildet ist und an ihrem oberen Ende schwenk- und feststellbar an der Greifzange (34) angelenkt ist, vorzugsweise an deren Basiskörper.

13. Reinigungsmaschine nach einem der Ansprüche 1 bis 12, dadurch gekennzeichnet, daß die Gefäße (1) durch den Zuförderer (7, 9) und/oder durch den Abförderer (8, 9) im Kopfbereich und mit Abstand davon im Rumpfbereich geführt sind.

14. Reinigungsmaschine nach Anspruch 13, dadurch gekennzeichnet, daß die Greifzangen (4, 24) zwischen die mit Abstand angeordneten Führungen des Zuförderers (7, 9) und/oder des Abförderers (8, 9) eingreifen.

15. Reinigungsmaschine nach einem der Ansprüche 1 bis 14, dadurch gekennzeichnet, daß die Klemmhebel (11a, b) über einen Teil ihrer Länge einen im wesentlichen rechteckigen und über einen anderen Teil ihrer Länge einen im wesentlichen winkelförmigen Querschnitt aufweisen, wobei die an die Gefäßform angepaßten Ausnehmungen (25) im Bereich mit winkelförmigem Querschnitt ausgebildet sind.

## Claims

1. A cleaning machine for containers, having a rotor which can be driven, which has a vertical axis of rotation, and on which swivelling gripping tongs units are disposed which have horizontal swivelling axes running tangentially to the circumference of the rotor, and on which spray nozzles for a cleaning material are disposed, having a feeder conveyor which introduces the containers, in their normal upright position, laterally into the gripping tongs units, having a discharge conveyor which carries off the containers, in their normal upright position, laterally from the gripping tongs units, and having a controller which swings the gripping tongs units with the containers which are grasped by them underneath their thickened tops in the region of rotation between the feeder and discharge conveyors and which at the same time inverts the containers, which are held without support at their bases, characterised in that each gripping tongs unit (4, 24, 34) consists of an elastic synthetic material and has two elastically movable clamping levers (11a, b; 26a, b), the shape of which is matched to the shape of the containers (1) in such a way that they are elastically spread apart by the containers (1) themselves during the introduction and removal thereof, and such that they positively and non-positively clamp a container (1) seated between the clamping levers (11a, b; 26a, b), wherein the maximum distance between the clamping levers (11a, b; 26a, b) in their unstressed state is less than the diameter of the container (1) in its region to be grasped, and the clamping levers (11a, b) are stiffened in such a way that they alone fix a grasped container (1) in the axial direction.

2. A cleaning machine according to claim 1, characterised in that an opening (12, 28) for introducing and removing the containers (1) is formed between the clamping levers (11a, b; 26a, b) and the clamping levers (11a, b; 26a, b) are provided towards the outside in the region of the opening (12, 28) with chamfers (30) or rounded-off portions (31).

3. A cleaning machine according to claims 1 or 2, characterised in that the gripping tongs units (4, 24, 34) are of one-piece construction and comprise a main body fixed to a mounting (14) and two flexible clamping levers (11a, b; 26a, b) which protrude therefrom.

4. A cleaning machine according to any one of claims 1 to 3, characterised in that the clamping levers (11a, b; 26a, b) are provided with recesses (25, 27) which are directed towards each other and which are matched to the shape of the containers (1), which recesses grasp and centre the containers (1) on both sides of a diameter line.

5. A cleaning machine according to any one of claims 1 to 4, characterised in that the gripping tongs units (4, 24, 34) have a Y-shaped or U-shaped basic shape, wherein the two side limbs can move elastically in relation to each other.

6. A cleaning machine according to any one of claims 1 to 5, characterised in that at least two gripping tongs units (4, 24), which can swivel jointly, are associated with each nozzle (6), wherein the upper gripping tongs unit (4) acts directly below the thickened top region and the lower gripping tongs unit (24) acts in the body region of a container (1) and leaves the base free.

7. A cleaning machine according to claim 6, characterised in that the jointly swivelling gripping tongs units (4, 24) are detachably disposed on a common mounting (14).

8. A cleaning machine according to claims 6 or 7, characterised in that jointly swivelling gripping tongs units (4, 24) are combined to form a constructional unit which can be replaced as a whole.

9. A cleaning machine according to any one of claims 1 to 5, characterised in that a gripping tongs unit (34) and a support (35) which can swivel jointly therewith are associated with each nozzle (6), wherein the gripping tongs unit (34) acts in the neck region directly below the thickened top and the support (35) acts in the shoulder or body region of a container (1) and leaves the base region free.

10. A cleaning machine according to claim 9, characterised in that the gripping tongs unit (34) and the support (35) which can swivel jointly therewith are detachably disposed on a common mounting (14).

11. A cleaning machine according to claim 9, characterised in that the gripping tongs unit (34) and the support (35) which can swivel jointly therewith are combined to form a structural unit which can be replaced as a whole.

12. A cleaning machine according to any one of claims 9 to 11, characterised in that the support (35) is of lever-like construction and is linked at its upper end to the gripping tongs unit (34), preferably to the main body thereof, so that the support can be swivelled and fixed.

13. A cleaning machine according to any one of claims 1 to 12, characterised in that the containers (1) are guide by the feeder conveyor (7, 9) and/or by the discharge conveyor (8, 9) in their top region and at a distance therefrom in their body region.

14. A cleaning machine according to claim 13, characterised in that the gripping tongs units (4, 24) act between the guides, which are disposed at a spacing, of the feeder conveyor (7, 9) and/or of the discharge conveyor (8, 9).

15. A cleaning machine according to any one of claims 1 to 14, characterised in that the clamping levers (11a, b) have a substantially rectangular cross-section over one part of their length and have a substantially angular cross-section over another part of their length, wherein the recesses (25) which are matched to the shaped of the containers are formed in the region with the angular cross-section.

## Revendications

1. Machine de nettoyage de récipients, dans laquelle :
- un rotor qui peut être entraîné en rotation autour d'un axe vertical, porte des pinces qui peuvent basculer autour d'axes horizontaux tangents à la périphérie circulaire du rotor, ainsi que des buses d'injection d'un agent de nettoyage,
- un transporteur d'amenée introduit latéralement dans des pinces de saisie les récipients en position normale verticale tandis qu'un transporteur d'évacuation retire latéralement des pinces les récipients en position normale verticale,
- un dispositif de commande prenant les pinces de prise avec les récipients saisis en dessous de leur tête épaissie, dans la zone de circulation entre les transporteurs d'amenée et de sortie, les faire basculer et ainsi les maintenir par la tête sans les soutenir par le fond,
caractérisée en ce que
chaque pince de saisie (4, 21, 34) est en matière plastique et comprend deux leviers de serrage (11a, b ; 26a, b) mobiles élastiquement et dont la forme est adaptée à celle des récipients (1), ces leviers s'écartant élastiquement par l'introduction ou le dégagement des récipients eux-mêmes et serrant à force et par combinaison de formes un récipient situé entre eux, tandis que la distance maximale séparant les leviers de serrage (11a, b ; 25a, b) lorsqu'ils ne sont pas en tension est inférieure au diamètre du récipient (1) dans la zone où il est saisi, les leviers (11a, b) présentant une rigidité suffisante pour maintenir seuls, en direction axiale, un récipient saisi (1).

2. Machine de nettoyage selon la revendication 1,
caractérisée en ce que
les leviers de serrage (11a, b ; 26a, b) délimitent une ouverture (12, 28) d'introduction et de dégagement des récipients (1) et présentent, au niveau de cette ouverture, des parties obliques (30) ou arrondies (31) vers l'extérieur.

3. Machine de nettoyage selon l'une des revendications 1 ou 2,
caractérisée en ce que
les pinces de saisie (4, 24, 34) sont faites d'une seule pièce comprenant un corps de base fixé à un support (14) et d'où partent en saillie deux leviers de serrage (11a, b ; 26a, b) flexibles.

4. Machine de nettoyage selon l'une des revendications 1 à 3,
caractérisée en ce que
les leviers de serrage (11a, b ; 26a, b) présentent des évidements (25, 27) se faisant face et adaptés à la forme des récipients (1) qu'ils saisissent de part et d'autre d'une ligne diamétrale en les centrant.

5. Machine de nettoyage selon l'une des revendications 1 à 4,
caractérisée en ce que
les pinces de saisie (4, 24, 34) ont une forme de base en U ou en Y dont les deux branches latérales sont mobiles élastiquement l'une par rapport à l'autre.

6. Machine de nettoyage selon l'une des revendications 1 à 5,
caractérisée en ce que
à chaque buse d'injection (6) sont associées au moins deux pinces de saisie (4, 24) pouvant basculer en même temps, la pince supérieure (4) saisissant un récipient (1) au niveau du col, directement en dessous de l'épaississement de la tête, tandis que la pince inférieure (24) effectue sa saisie sur le corps du récipient.

7. Machine de nettoyage selon la revendication 6,
caractérisée en ce que
les pinces de saisie (4, 24) basculant ensemble peuvent être placées de manière amovible sur un support commun (14).

8. Machine de nettoyage selon l'une des revendications 6 ou 7,
caractérisée en ce que
les pinces de saisie (4, 24) basculant ensemble sont reliées de manière à former un composant échangeable.

9. Machine de nettoyage selon l'une des revendications 1 à 5,
caractérisée en ce que
à chaque buse d'injection (6) sont associés une pince de saisie (34) et un organe de soutien (35) basculant avec celle-ci, la pince (34) saisissant un récipient (1) au niveau du col, directement en dessous de l'épaississement de la tête, tandis que le soutien (35) effectue sa saisie au niveau de l'épaulement ou du corps du récipient, le fond restant libre.

10. Machine de nettoyage selon la revendication 9,
caractérisée en ce que
la pince de saisie (34) et le soutien (35) basculant avec elle sont montés amovibles sur un support commun (14).

11. Machine de nettoyage selon l'une des revendications 9 ou 10,
caractérisée en ce que
la pince de saisie (34) et le support (34) basculant avec elle sont reliés de manière à former un composant échangeable.

12. Machine de nettoyage selon l'une des revendications 9 à 11,
caractérisée en ce que
le soutien (35) a la forme d'un levier dont l'extrémité supérieure est articulée à la pince de saisie (34), de préférence au corps de base de celle-ci, avec possibilité de basculement et de blocage.

13. Machine de nettoyage selon l'une des revendications 1 à 12,
caractérisée en ce que
les récipients (1) sont déplacés par le transporteur d'amenée (7, 9) et/ou le transporteur d'évacuation (8, 9), en étant tenus près de la tête et espacés au niveau de leur corps.

14. Machine de nettoyage selon la revendication 13,
caractérisée en ce que
les pinces (4, 24) exercent leur saisie entre les guides espacés du transporteur d'amenée (7, 9) et/ou du transporteur d'évacuation (8, 9).

15. Machine de nettoyage selon l'une des revendications 1 à 14,
caractérisée en ce que
les leviers de serrage (11a, b) présentent sur une partie de leur longueur une section essentiellement rectangulaire et sur une autre partie une section essentiellement en forme d'angle, les évidements (25) adaptés à la forme du récipient se trouvant dans la zone à section angulaire.
